# EUROPEAN PATENT SPECIFICATION

(11) **EP 1 687 815 B1**
(45) Date of publication and mention of the grant of the patent: **21.05.2008**
(21) Application number: 04799131.0
(22) Date of filing: 12.11.2004
(51) Int. Cl.: G11B 19/04, G06F 1/26, G11B 27/10

(54) **CALCULATING REQUIRED ENERGY**
BERECHNUNG DER ERFORDERLICHEN ENERGIE
CALCUL DE L'ENERGIE REQUISE

(30) Priority: 18.11.2003 EP 03104248
(43) Date of publication of application: 09.08.2006
(73) Proprietor: Koninklijke Philips Electronics N.V., 5621 BA Eindhoven (NL)
(72) Inventor: VAN GASSEL, Jozef, P., NL-5656 AA Eindhoven (NL)
(74) Representative: van Oudheusden-Perset, Laure E.
(86) International application number: PCT/IB2004/052401
(87) International publication number: WO 2005/050637

(56) References cited:
- EP-A- 1 028 425
- EP-A- 1 209 676
- WO-A-03/036647
- US-B1- 6 631 101

## Description

The invention relates to a battery powered device for playback of a media title from a memory unit, the device comprising means for determining available battery energy and calculation means for calculating the energy required for the playback of the media title to the end, in relation to the available energy.

The invention further relates to a method for playback of a media title, comprising the steps of retrieving the media title from a memory unit, determining available battery energy and calculating the energy required for the playback of the media title to the end in relation to the available energy.

The invention also relates to a computer program product.

Patent application US2003020700 describes a method to control and manage the status of a battery of a portable multimedia device. The multimedia device is suitable for playing back a video sequence. The method comprises the steps of evaluating the energy required for playback of the video sequence, evaluating the energy available in the battery and selecting a low energy consuming process, or a high energy consuming process for displaying the video sequence depending on the energy available in the battery. In advance of playing back the video sequence the user may adjust the amount of energy to be conserved after playback. The claimed method is particularly employed in third generation (3G) mobile phones.

In the device corresponding to the patent application US2003020700 a memory is used for storage of the video sequence. Memories as used in the device corresponding to said application are particularly suited for fast access to relatively small video sequences. Applying such memories for storage of relatively large video sequences, like for example complete motion pictures, is very expensive.

It is an object of the invention to provide a battery powered device of the kind set forth in the first paragraph for the playback of relatively large media titles, with the possibility of evaluating the energy required for playback of such media title to the end.

With the battery powered device of the invention this is realized in that the memory unit comprises a storage medium and reading means for reading at least a part of the media title from the storage medium and in that the reading means is arranged for retrieving playback control information concerning the media title and the calculation means is arranged for calculating the required energy depending on the playback control information and an energy consumption model.

The method according to the present invention is characterized in that the memory unit comprises a storage medium and the method comprises the steps of reading at least a part of the media title from the storage medium, retrieving playback control information concerning the media title and calculating the required energy depending on the playback control information and an energy consumption model.

A media title is a defined amount of audiovisual data which a user normally wants to playback entirely from the start to the end. A media title may for example be a music video clip, or a movie.

The invention relies on the fact that different types of memory may be used for storing media titles. Solid state memories as used in the device corresponding to the patent application US2003020700 are particularly suited for access to relatively small media titles. When playing back a media title on a device using a solid state memory for storing the media title, most of the energy is consumed by the display process. Solid state memories suitable for storage of relatively large media titles, like for example complete motion pictures, are very expensive.

For the storage of large media titles usually storage mediums are used, which have a larger storage capacity and are far less expensive per Megabyte of stored data. These storage mediums may for example be a hard disk (HD) or an optical disk (e.g. CD, DVD). For reading out a storage medium, specialized reading means are necessary. Mostly the storage medium is read out while rotating at high speeds and a reading disk head moves radially along the rotating medium while retrieving data. Reading data from a storage medium requires a lot of energy. The inventors have seen that for accurately calculating the energy required for the playback of a media title to the end, the energy required for reading the media stream from the storage medium must be taken into account.

Playback control information is stored with the media title or elsewhere on the storage medium for facilitating playback of the media title. This playback control information may for example comprise information about, the resolution of a video, the playing time of a media title, the compression format or the compression rate of the data, or the sequence in which different parts of the media title should be displayed. Based on the playback control information a calculation can be made of the energy required for the playback of the media title to the end.

The calculation of the required energy is based on an energy consumption model of the device. This model at least encloses the average energy consumption of the memory unit and the display unit per unit of time or file size. The energy consumption model may also be a more detailed model, modeling all actions to be performed for playing back a media title, stored on a storage medium. The type of the storage medium, the energy required for retrieving a MB of data from the storage medium, the energy required for displaying a minute of a media title in a specific resolution and lots of other elements may be part of a detailed energy consumption model.

The invention can be used for existing predefined media stream formats and logical disc formats comprising playback control information for helping the playback device to control the playback of media titles. The playback control information is retrieved and used for calculation of the energy required for the playback of a media title to the end. The calculation is performed although no specific information about energy consumption is enclosed in such predefined media stream formats.

An embodiment of the battery powered device according to the present invention further comprises warning means for providing a warning signal when not enough battery energy is available for playback of a media title to the end. When a warning signal is provided the user may choose to ignore the warning and continue playback until the battery energy is finally too low for playing the remaining part of the media title, or the user may choose to give new instructions to the device. The user thus has the opportunity to anticipate an upcoming energy shortage.

In another embodiment of the battery powered device according to the present invention the warning means comprises means for offering a user a range of options for choosing which action to perform when not enough battery energy is available for playback of the media title to the end. Such options may for example be playing back the media title in a lower resolution or in a shorter version of the media title, hereby reducing the amount of data to be retrieved from the storage medium and thus reducing the amount of energy required for playing back the media title. A low resolution version of a media title may be a title stored separately from the larger original title. A shorter version for example consists of a list of in and out pointer pointing to start and end of certain segments in the file stored on the storage medium. These and other options may for example be presented to the user in the form of an option menu shown on the display screen.

In an embodiment of the battery powered device according to the present invention the reading means is arranged for retrieving the file size of the media title and the calculation means is arranged for calculating the required energy depending on the file size of the media title. The energy required for the playback of a media title to the end depends on the file size of the media title. Playback of larger media titles generally requires more energy than playback of smaller media titles. Especially in combination with playback control information, like the compression rate of the data, file size is a good predictor for energy consumption.

Another embodiment of the battery powered device according to the present invention further comprises a buffer for holding the part of the media title, and a playback unit for consuming the part of the media title from the buffer, and the calculation means is arranged for calculating the required energy depending on the number of times the reading means have to fill the buffer for playback of the media title to the end. When the reading means reads part of the media title, the part is temporarily held in the buffer, before being consumed by the playback unit. Much energy is consumed by the process of reading the media title from the storage medium and filling the buffer. Knowing how many times the buffer has to be filled for playback of the media title to the end, significantly adds to the accuracy of the energy consumption calculation.

In another embodiment of the battery powered device according to the present invention the reading means is arranged for retrieving the playing time of the media title and the calculation means is arranged for calculating the required energy depending on the playing time of the media title. The energy required for the playback of a media title to the end depends on the playing time of the media title. Playback of longer media titles generally requires more energy than playback of shorter media titles. Especially in combination with playback control information, like resolution and frame rate of a video, playing time is a good predictor for energy consumption.

These and other aspects of the invention are apparent from and will be elucidated with reference to the embodiments described hereinafter.

In the drawings:
Fig. 1 is a block diagram of an embodiment of a playback device according to the present invention.
Fig. 2 is a schematic presentation of part of a media stream and corresponding CPI-information.
Fig. 3 is a block diagram of an embodiment of a playback device according to the present invention, comprising warning means.
Fig. 4 is a block diagram of an embodiment of a playback device according to the present invention, comprising a buffer.

In the diagrams below, similar references designate similar elements.

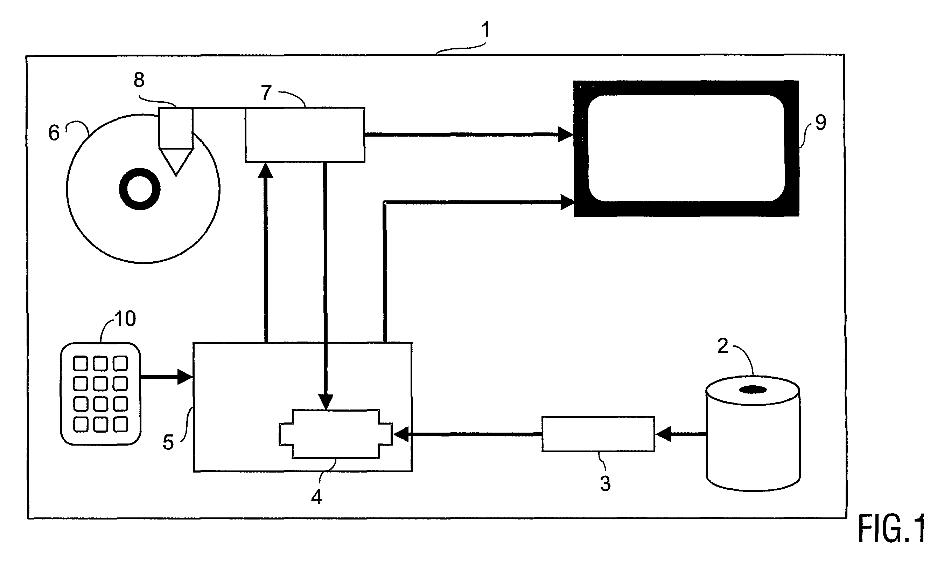

Fig. 1 is a block diagram of a playback device 1 according to the present invention. The playback device 1 comprises reading means for reading a media title from a storage medium 6. The reading means comprises a disk head 8 for accessing the data on the storage medium 6, a motor unit (not shown in Fig. 1) for rotating the storage medium 6, an actuator (not shown in Fig. 1) for moving the disk head 8 to its reading position and a read unit 7 for controlling the data read out process and processing the data read by the disk head 8. Playback control information is also retrieved by the read unit 7. A control unit 5 controls the processes of reading the media title from the storage medium 6 and displaying it on a display screen that is part of a playback unit 9. The control unit 5 comprises a calculation unit 4 for calculating the energy required for the playback of the media title to the end depending on playback control information which is retrieved from the storage medium 6 by the read unit 7. An interface 10 such as a keyboard or a menu with cursor control, enables the user to program the control unit 5. A battery power monitoring circuit 3 determines the energy available in the battery 2. Such circuits are well known and often used in present day portable devices like e.g. portable audio players, mobile phones, electronic organizers or portable DVD players.

Media titles are stored on the storage medium 6. The storage medium 6 may be a hard disk or an optical disk (e.g. CD or DVD) or any other rotary storage medium.

Playback control information is stored with the media title or elsewhere on the storage medium 6 for facilitating playback. This playback control information may for example contain information about, the resolution of a video, the playing time of a media title, the compression format or the compression rate of the data, the frame rate of a video, or the sequence in which different parts of the media title should be displayed. The playback control information is retrieved from the storage medium 6 by the reading unit 7 and supplied to the calculation unit 4.

The control unit 5 and the calculation unit 4 may for example be implemented in driver software or in hardware by using a processor and a memory.

Based on the playback control information and the energy consumption model for the device, the calculation unit 4 makes an estimation of the energy required for the playback of the media title to the end. The calculation unit may for example multiply the playing time, available from the playback control information, by a predefined average energy consumption per minute in order to obtain a value for the total estimated energy consumption. Using a more detailed energy consumption model, a more accurate calculation of the energy consumption can be done depending on other aspects of the playback control information, like resolution and frame rate. Playing back low resolution or low frame rate videos requires less energy consumption per minute than playing back high resolution or high frame rate videos.

A battery power monitoring circuit 3, determines the energy available in the battery 2, for example by monitoring the battery voltage or the current in a detection circuit with a known resistance. The amount of available energy is communicated to the calculation unit 4. The calculation unit 4 compares the available energy with the required energy, thus enabling the device 1 to anticipate a energy shortage.

In an embodiment of a playback device 1 the reading unit 7 is arranged for retrieving the file size of the media title and the calculation unit 4 is arranged for calculating the required energy consumption depending on the file size of the media title. The calculation unit may for example multiply the file size by a predefined average energy consumption for retrieving a Megabyte in order to obtain a value for the total estimated energy consumption. Further extending the energy consumption model, e.g. by considering the compression rate of the data, which may be part of the playback control information, the calculation can be performed more accurately. The file size and other information may be retrieved from the playback control information or from the file system information also stored on the storage medium 6 or available in system memory.

In another embodiment of a playback device 1 the reading unit 7 is arranged for retrieving the playing time of the media title and the calculation unit 4 is arranged for calculating the required energy consumption depending on the playing time. The playing time may be retrieved or calculated from the playback control information. The playing time for a media title may for example be the total playing time of a movie picture, which may be available from the playback control information. For constant bit rate media titles, playing time can be easily calculated by dividing the file size of the media title by its bit rate. The bit rate may be part of the playback control information.

In another embodiment of a playback device 1 the playback control information comprises characteristic point information and the calculation means 4 is arranged for calculating the required energy consumption depending on the characteristic point information. Characteristic point information (CPI) comprises tables of locations within the media title which are suitable for navigating when playing back in different playback modes. For example CPI is enclosed in the predefined media title format of Blu-ray Disc.

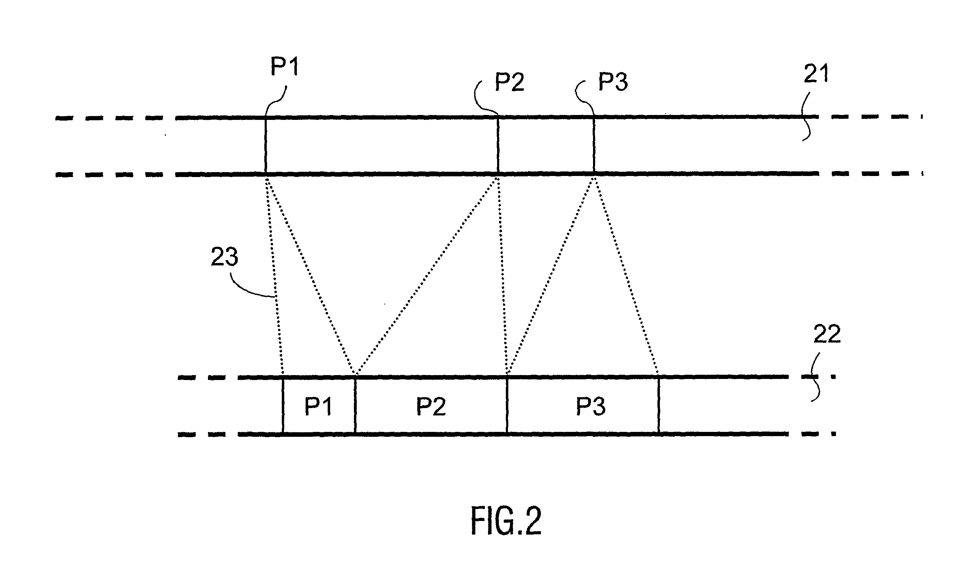

Fig. 2 shows part of a media stream file 21 and a corresponding part of the characteristic point information (CPI) 22. CPI comprises tables of and pointers 23 to locations within the media title 21 which are suitable for navigating when playing back in different playback modes. CPI is used to determine the location of entry points (P1, P2, P3) for trick play (for example fast forward, fast reverse), interactive play (user chooses where to start playing a media stream) or simple editing involving clip truncation. Information about an entry point in the media title is stored in the CPI. For an entry point the CPI can for example store the location of the entry point in the media title, the presentation time of the part of the media title starting at the entry point or whether the corresponding part of the media title is to be displayed when in fast forward mode. The CPI is stored separate from the media title, e.g. in a special area of the storage medium or in a special file. In order to use CPI effectively, the CPI data has to be stored in system memory, so that there is no need to read or write CPI data from or to disc during time critical operations. CPI is described in more detail in WO00/28544.

In this invention, the CPI is very relevant for accurately determining the energy consumed in non-linear playback modes. With the information from the CPI the time needed for playing back a media title in non-linear playback modes is calculated. The playing time of a media title can be calculated from the presentation time of the first and last entry points in the media title. This method may be used for calculating the playing time for both constant and variable bit rate media titles. Playing time is an important parameter for the energy consumption model.

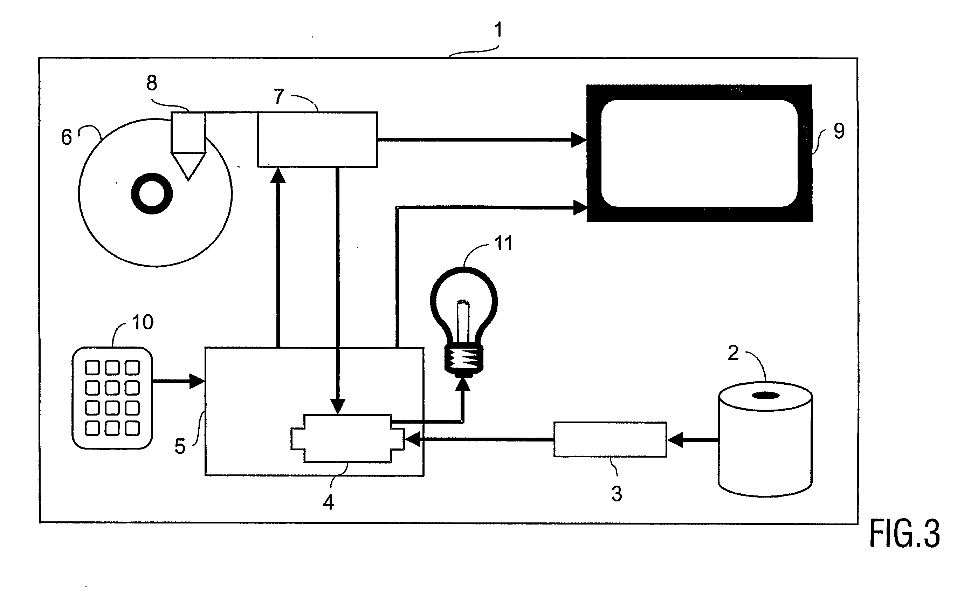

Fig. 3 is a block diagram of another embodiment of a playback device 1. The device shown in Fig. 3 comprises all the elements of the device according to Fig.1. In the device 1 shown in Fig. 3 warning means 11 is included for providing a warning signal in case of a threatening energy shortage. This warning signal may for example be a flashing light emitting diode, a warning message on the display screen or a warning sound produced by the speakers (not shown in Fig. 3) of the device 1. When a warning signal is provided the user may choose to ignore the warning and continue playback until the battery energy is finally too low for playing the remaining part of the media title, or the user may choose to give new instructions to the device 1. Such instructions may for example result in canceling the playback of the media title or playing back another media title for which less energy consumption is required for playing back to the end.

In another embodiment of a playback device 1 the control unit 5 is arranged for offering a user a range of options for choosing which action to perform when not enough battery energy is available for playback of the media title to the end, such as playing back the media title in a lower resolution or skipping some parts of the media title. The control unit 5 is arranged for informing the user about the available options, e.g. in the form of an option menu shown on the display screen. Such options may for example be playing back the media title in a lower resolution or in a shorter version of the media title, hereby reducing the amount of data to be retrieved from the storage medium and thus reducing the amount of energy required for playing back the media title. A low resolution version of a media title may be a title stored separately from the larger original high resolution title. A shorter version of a media title is a version with less playing time than the original version and may be stored separately on the storage medium. In an embodiment a shorter version consists of a list of in and out pointers pointing to start and end of certain segments in the file to be played back, stored on the storage medium, requiring only a negligible amount of extra storage capacity. Hence the possible number of versions of a media title is very high and the playing time can be chosen at will. A shorter version may also be auto generated before or during play back. An example of an auto generated shorter version is a version of a movie without dialogues or a version with only dialogues. Scenes with dialogues may for example be identified by the presence of subtitles. A shorter version may also be auto generated depending on a user defined playing time and a list indicating the importance of all scenes of a movie. A required playing time is achieved by omitting scenes of low importance. A shorter version may also be a user defined version of a media title. A DVD chapter selection menu may be used for defining the sequence in which different parts of the media title should be displayed. The user may for example decide not to playback parts of a media title which the user supposes to be less relevant. The control unit 5 is instructed to perform the appropriate action by the user via a user interface 10. When the user chooses an action to be performed, the control unit 5 controls the read unit 7, and the display screen to provide a playback sequence according to the choice of the user.

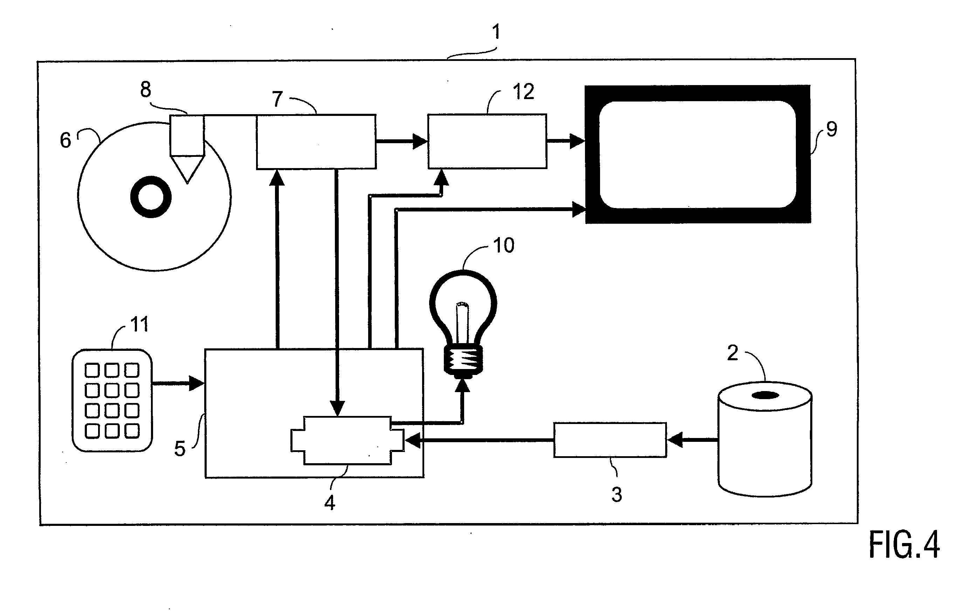

In Fig. 4 a block diagram of another embodiment is shown. The device 1 comprises a buffer 12 for holding the part of the media title and a playback unit 9 for consuming the part of the media title from the buffer 12. During playback of a media title the buffer 12 is filled and emptied in a cyclic process. Part of the media title is read from the storage medium 6. The part of the media stream is temporarily stored in the buffer 12 from which it is consumed by the playback unit 9. When the buffer 12 is nearly empty, the read unit 7 reads the next part of the media stream from the storage medium 6. This process is repeated until the media title is played back to the end.

After the buffer 12 is refilled the storage medium 6 spins down to preserve energy. When the buffer 12 is to be refilled the storage medium 6 is spun up. The repeated spinning up of the storage medium 6 accounts for a significant part of the energy consumption required for playing back the media stream to the end. In this embodiment the calculation unit 4 is arranged for calculating the required energy consumption depending on the number of times the read unit 7 has to fill the buffer 12 for playback of the media title to the end. This number of buffer fillings may be estimated by dividing the file size of the media title by the size of the buffer. For calculation of the energy required for playback of the media title to the end the number of buffer fillings may be multiplied with an average value for the energy required for the filling of the buffer. A more accurate calculation of the required energy consumption can be made when the calculation unit 4 is arranged for determining the amount of energy needed for filling of the buffer 12 and for calculating the required energy consumption depending on the amount of energy needed for filling of the buffer 12.

The amount of energy needed for filling of the buffer 12 for example depends on the location of the media title on the storage medium 6. The location of the content on the storage medium 6 may affect the speed of retrieval. Hard disks and Blu-ray disks for example rotate with a constant angular velocity and a constant information density all over the disk. Thus the outer part of the storage medium, because of its greater diameter has a greater circumference than the inner part of the storage medium. From the outer parts of the storage medium a greater part of the media stream is read per rotation of the storage medium, resulting in a smaller amount of time needed for buffer refilling and less energy consumption required for a buffer refilling.

It is noted that in the examples given above calculating and determining the energy is performed when the user gives a command to play a media title. Obviously calculation and determination can be performed repeatedly during playback, for example to take into account that the user enters trick play modes during playback.

In an embodiment of a playback device 1 an indicator is displayed showing how much of the remainder (e.g. percentage) of the media title can be played back given the current state of the battery. In the event that the indicator shows less than 100%, the user can for example skip some parts of the media title. This way the required energy is reduced until the indicator shows 100% or more.

It is also noted that playing back a shorter version of a media title is not only an attractive option when an energy shortage is predicted. Playback of a shorter version is also an option when a predefined amount of energy is to be preserved or when the user has got only a fixed amount of time, longer than the playing time of the original movie, for watching a video.

It is also noted, that in this document the word 'comprising' does not exclude the presence of other elements or steps than those listed and the word 'a' or 'an' preceding an element does not exclude the presence of a plurality of such elements, that any reference signs do not limit the scope of the claims, that the invention may be implemented by means of both hardware and software, and that several 'means' may be represented by the same item of hardware. Further, the scope of the invention is not limited to the embodiments, and the invention lies in each and every novel feature or combination of features described above.

## Claims

1. Battery powered device (1) for playback of a media title from a memory unit, the device comprising means (3) for determining available energy and calculation means (4) for calculating energy required for playback of the media title to the end in relation to the available energy, the memory unit comprising a storage medium (6) and reading means (7,8) for reading at least a part of the media title from the storage medium (6), **characterized by** the reading means (7,8) being arranged for retrieving playback control information (5) concerning the media title and the calculation means (4) being arranged for calculating said required energy depending on the playback control information (5) and an energy consumption model of the device.

2. Battery powered device (1) as claimed in claim 1, which comprises warning means (9) for providing a warning signal when not enough battery energy is available for playback of a media title to the end.

3. Battery powered device (1) as claimed in claim 1, comprising interaction means (10) for offering a user options for choosing an action to perform in relation to the required energy and available energy, such as playing back in a lower resolution or playing back a shorter version of the media title.

4. Battery powered device (1) as claimed in claim 3, wherein the playback information for generating a shorter version of the media title is retrieved from the storage medium, auto generated before or during playback, or edited by a user.

5. Battery powered device (1) as claimed in claim 1, wherein the reading means (6) is arranged for retrieving the file size of the media title and the calculation means (4) is arranged for calculating the required energy depending on the file size of the media title.

6. Battery powered device (1) as claimed in claim 5, comprising a buffer (11) for holding the part of the media title, and a playback unit (9) for consuming the part of the media title from the buffer (11), wherein the calculation means (4) is arranged for calculating the required energy depending on the number of times the reading means have to fill the buffer (11) for playback of the media title to the end.

7. Battery powered device (1) as claimed in claim 6 wherein the calculation means (4) is arranged for determining the amount of energy needed for filling of the buffer (11) and for calculating the required energy depending on the amount of energy needed for filling of the buffer (11).

8. Battery powered device (1) as claimed in claim 7, wherein the calculation means (4) is arranged for determining the amount of energy needed for filling of the buffer (11) depending on information about the location of the media title on the storage medium (6).

9. Battery powered device (1) as claimed in claim 1, wherein the reading means (7,8) is arranged for retrieving the playing time of the media title and the calculation means (4) is arranged for calculating the required energy depending on the playing time of the media title.

10. Battery powered device (1) as claimed in claim 1, wherein the playback control information comprises characteristic point information and the calculation means (4) is arranged for calculating the required energy depending on the characteristic point information.

11. Method for playback of a media title in a battery powered device (1), comprising the steps of retrieving the media title from a storage medium (6), determining available battery energy, calculating the energy required for the playback of the media title to the end in relation to the available energy, reading at least a part of the media title from the storage medium (6), retrieving playback control information (5) concerning the media title and calculating the required energy depending on the playback control information (5) and an energy consumption model of the device.

12. Computer program product which program is operative to cause a processor to perform the method as claimed in claim 11.

## Patentansprüche

1. Batteriebetriebene Vorrichtung (1) für die Wiedergabe eines Medientitels aus einer Speichereinheit, wobei die Vorrichtung Mittel (3) zum Bestimmen der Batterieenergie und Rechenmittel (4) zum Berechnen der für die vollständige Wiedergabe des Medientitels erforderlichen Energie in Bezug auf die verfügbare Energie umfasst, und wobei die Speichereinheit ein Speichermedium (6) sowie Lesemittel (7, 8) umfasst, um mindestens einen Teil des Medientitels aus dem Speichermedium (6) auszulesen, **dadurch gekennzeichnet, dass** die Lesemittel (7, 8) dafür eingerichtet sind, den Medientitel betreffende Wiedergabesteuerungsinformationen (5) abzurufen, und die Rechenmittel (4) dafür eingerichtet sind, in Abhängigkeit von den Wiedergabesteuerungsinformationen (5) und einem Energieverbrauchsmodell der Vorrichtung die erforderliche Energie zu berechnen.

2. Batteriebetriebene Vorrichtung (1) nach Anspruch 1 mit Warnmitteln (9), um ein Warnsignal bereitzustellen, falls nicht genügend Energie für die vollständige Wiedergabe eines Medientitels vorhanden ist.

3. Batteriebetriebene Vorrichtung (1) nach Anspruch 1, mit Interaktionsmittel (10), um dem Benutzer Alternativen für die Auswahl einer durchzuführenden Aktion in Bezug auf die erforderliche Energie und die vorhandene Energie anzubieten, wie beispielsweise die Wiedergabe mit einer geringeren Auflösung oder die Wiedergabe einer kürzeren Version des Medientitels.

4. Batteriebetriebene Vorrichtung (1) nach Anspruch 3, wobei die Wiedergabeinformation zum Erzeugen einer kürzeren Version des Medientitels vom Speichermedium abgerufen, vor oder während der Wiedergabe automatisch erzeugt oder von einem Benutzer bearbeitet wird.

5. Batteriebetriebene Vorrichtung (1) nach Anspruch 1, wobei die Lesemittel (6) dafür eingerichtet sind, die Dateigröße des Medientitels abzurufen, und die Rechenmittel (4) dafür eingerichtet sind, in Abhängigkeit von der Dateigröße des Medientitels die erforderliche Energie zu berechnen.

6. Batteriebetriebene Vorrichtung (1) nach Anspruch 5, mit einem Zwischenspeicher (11), um einen Teil des Medientitels aufzunehmen, und einer Wiedergabeeinheit (9), um den Teil des Medientitels aus dem Zwischenspeicher (11) zu verarbeiten, wobei die Rechenmittel (4) dafür eingerichtet sind, die erforderliche Energie in Abhängigkeit davon zu berechnen, wie oft die Lesemittel den Zwischenspeicher (11) füllen müssen, um den Medientitel vollständig wiederzugeben.

7. Batteriebetriebene Vorrichtung (1) nach Anspruch 6, wobei die Rechenmittel (4) dafür eingerichtet sind, die zum Füllen des Zwischenspeichers (11) erforderliche Energiemenge zu bestimmen und in Abhängigkeit von der zum Füllen des Zwischenspeichers (11) erforderlichen Energiemenge die erforderliche Energie zu berechnen.

8. Batteriebetriebene Vorrichtung (1) nach Anspruch 7, wobei die Rechenmittel (4) dafür eingerichtet sind, die zum Füllen des Zwischenspeichers (11) erforderliche Energiemenge in Abhängigkeit von dem Ort des Medientitels auf dem Speichermedium (6) zu bestimmen.

9. Batteriebetriebene Vorrichtung (1) nach Anspruch 1, wobei die Lesemittel (7, 8) dafür eingerichtet sind, die Wiedergabedauer des Medientitels abzurufen, und die Rechenmittel (4) dafür eingerichtet sind, in Abhängigkeit von der Wiedergabedauer die erforderliche Energie zu berechnen.

10. Batteriebetriebene Vorrichtung (1) nach Anspruch 1, wobei die Wiedergabesteuerungsinformationen charakteristische Punktinformationen umfassen und die Rechenmittel (4) dafür eingerichtet sind, in Abhängigkeit von den charakteristischen Punktinformationen die erforderliche Energie zu berechnen.

11. Verfahren für die Wiedergabe eines Medientitels in einer batteriebetriebenen Vorrichtung (1), das folgende Schritte umfasst: Abrufen des Medientitels von einem Speichermedium (6), Bestimmen der verfügbaren Batterieenergie, Berechnen der für die vollständige Wiedergabe des Medientitels erforderlichen Energie in Bezug auf die verfügbare Energie, Auslesen mindestens eines Teils des Medientitels aus dem Speichermedium (6), Abrufen von den Medientitel betreffenden Wiedergabesteuerungsinformationen (5) sowie Berechnen der erforderlichen Energie in Abhängigkeit von den Wiedergabesteuerungsinformationen (5) und einem Energieverbrauchsmodell der Vorrichtung.

12. Computerprogrammprodukt, welches einen Prozessor dazu veranlassen kann, das Verfahren nach Anspruch 11 durchzuführen.

## Revendications

1. Dispositif alimenté par batterie (1) permettant de lire un titre de média à partir d'une unité mémoire, le dispositif comprenant des moyens (3) pour déterminer une énergie disponible et des moyens de calcul (4) pour calculer une énergie requise pour lire le titre de média jusqu'à la fin par rapport à l'énergie disponible, l'unité mémoire comprenant un support de stockage (6) et des moyens de lecture (7, 8) pour lire au moins une partie du titre de média à partir du support de stockage (6), **caractérisé en ce que** les moyens de lecture (7, 8) sont aménagés pour extraire des informations de commande de lecture (5) concernant le titre de média et les moyens de calcul (4) sont aménagés pour calculer ladite énergie requise en fonction des informations de commande de lecture (5) et d'un modèle de consommation d'énergie du dispositif.

2. Dispositif alimenté par batterie (1) selon la revendication 1, comprenant des moyens d'avertissement (9) pour fournir un signal d'avertissement quand il n'y plus assez d'énergie de batterie disponible pour restituer un titre de média jusqu'à la fin.

3. Dispositif alimenté par batterie (1) selon la revendication 1, comprenant des moyens d'interaction (10) pour offrir à l'utilisateur des options permettant de choisir une action à réaliser en rapport à l'énergie requise et l'énergie disponible, telle qu'une lecture dans une résolution inférieure ou une lecture d'une version plus courte du titre de média.

4. Dispositif alimenté par batterie (1) selon la revendication 3, dans lequel les informations de lecture permettant de générer une version plus courte du titre de média sont extraites du support de stockage, auto-générées avant ou pendant la lecture, ou éditées par un utilisateur.

5. Dispositif alimenté par batterie (1) selon la revendication 1, dans lequel les moyens de lecture (6) sont aménagés pour extraire la taille de fichier du titre de média et les moyens de calcul (4) sont aménagés pour calculer l'énergie requise en fonction de la taille de fichier du titre de média.

6. Dispositif alimenté par batterie (1) selon la revendication 5, comprenant un tampon (11) pour stocker la partie du titre de média, et une unité de restitution (9) pour consommer la partie du titre de média du tampon (11), dans lequel les moyens de calcul (4) sont aménagés pour calculer l'énergie requise en fonction du nombre de fois que les moyens de lecture doivent remplir le tampon (11) pour une lecture du titre de média jusqu'à la fin.

7. Dispositif alimenté par batterie (1) selon la revendication 6, dans lequel les moyens de calcul (4) sont aménagés pour déterminer la quantité d'énergie nécessaire pour remplir le tampon (11) et pour calculer l'énergie requise en fonction de la quantité d'énergie nécessaire pour remplir le tampon (11).

8. Dispositif alimenté par batterie (1) selon la revendication 7, dans lequel les moyens de calcul (4) sont aménagés pour déterminer la quantité d'énergie nécessaire pour remplir le tampon (11) en fonction d'informations concernant l'emplacement du titre de média sur le support de stockage (6).

9. Dispositif alimenté par batterie (1) selon la revendication 1, dans lequel les moyens de lecture (7, 8) sont aménagés pour extraire le temps de lecture du titre de média et les moyens de calcul (4) sont aménagés pour calculer l'énergie requise en fonction du temps de lecture du titre de média.

10. Dispositif alimenté par batterie (1) selon la revendication 1, dans lequel les informations de commande de lecture comprennent des informations de points caractéristiques et les moyens de calcul (4) sont aménagés pour calculer l'énergie requise en fonction des informations de points caractéristiques.

11. Procédé de lecture d'un titre de média dans un dispositif alimenté par batterie (1), comprenant les étapes d'extraction du titre de média d'un support de stockage (6), de détermination de l'énergie de batterie disponible, de calcul de l'énergie requise pour la lecture du titre de média jusqu'à la fin par rapport à l'énergie disponible, de lecture d'au moins une partie du titre de média à partir du support de stockage (6), d'extraction d'informations de commande de lecture (5) concernant le titre de média et de calcul de l'énergie requise en fonction des informations de commande de lecture (5) et d'un modèle de consommation d'énergie du dispositif.

12. Produit de programme informatique dont le programme fonctionne pour amener un processeur à réaliser le procédé selon la revendication 11.
